# EUROPEAN PATENT APPLICATION

(11) **EP 4 651 399 A1**
(43) Date of publication of application: **19.11.2025**
(21) Application number: 24744073.8
(22) Date of filing: 02.01.2024
(51) Int. Cl.: H04B 7/185, H04B 17/345, H04W 16/14, H04B 7/19, H04W 52/50

(54) **METHOD FOR DETERMINING INTERFERENCE ZONE INFORMATION, COMMUNICATION APPARATUS, AND COMMUNICATION SYSTEM**

(30) Priority: 20.01.2023 CN 202310125229
(71) Applicant: Huawei Technologies Co., Ltd., Shenzhen, Guangdong 518129 (CN)
(72) Inventor: HAN, Zhilin, Shenzhen, Guangdong 518129 (CN); ZHU, Haoren, Shenzhen, Guangdong 518129 (CN); CHEN, Weimin, Shenzhen, Guangdong 518129 (CN)
(74) Representative: Körber, Martin Hans
(86) International application number: PCT/CN2024/070229
(87) International publication number: WO 2024/152897

(57) **Abstract**

This application provides a method for determining interference area information, a communication apparatus, and a communication system. The method includes: A first network device determines a coverage area of a satellite. The first network device determines interference area information based on a frequency band used by the satellite and a frequency band used by an access network device within the coverage area, where the interference area information includes identification information of at least one access network device within the coverage area, and there is an intersection between a frequency band used by the at least one access network device and the frequency band used by the satellite. In this solution, if there is an intersection between the frequency band used by the access network device within the coverage area of the satellite and the frequency band used by the satellite, a signal transmitted by the access network device is more likely to have relatively great impact on a service of the satellite. Therefore, the first network device determines the access network device as an access network device that may interfere with the service of the satellite, so that an access network device that affects service quality of the satellite can be accurately determined.

## Description

### CROSS-REFERENCE TO RELATED APPLICATIONS

This application claims priority to Chinese Patent Application No. 202310125229.7, filed with the China National Intellectual Property Administration on January 20, 2023 and entitled "METHOD FOR DETERMINING INTERFERENCE AREA INFORMATION, COMMUNICATION APPARATUS, AND COMMUNICATION SYSTEM", which is incorporated herein by reference in its entirety.

### TECHNICAL FIELD

This application relates to the field of wireless communication technologies, and in particular, to a method for determining interference area information, a communication apparatus, and a communication system.

### BACKGROUND

With development of communication technologies, applications of satellites are increasingly extensive. A satellite transmits signals to the surface of the earth and processes received signals to obtain a processing result. For example, in an application scenario of satellite sounding, a satellite transmits a microwave signal to the ground, receives a microwave signal reflected within a beam coverage, and then processes the received microwave signal to obtain an image.

Because a large quantity of terrestrial access network devices (for example, terrestrial base stations) are deployed on the ground, when the satellite transmits a signal, the terrestrial access network devices also transmit signals. Therefore, the signal transmitted by the terrestrial access network devices may cause interference to a receiver of the satellite. As a result, the satellite cannot normally collect a reflected signal, and service quality of the satellite is affected.

Therefore, to improve service quality of the satellite, transmit power of a terrestrial access network device that affects service quality of the satellite needs to be reduced, or even the terrestrial access network device needs to be indicated to stop transmitting a signal.

However, currently, there is no good solution for determining a terrestrial access network device whose transmit power needs to be reduced or that needs to stop transmitting a signal, in other words, for determining a terrestrial access network device that affects service quality of the satellite.

### SUMMARY

This application provides a method for determining interference area information, a communication apparatus, and a communication system, to accurately determine an access network device that affects service quality of a satellite.

According to a first aspect, an embodiment of this application provides a method for determining interference area information. The method may be performed by a first network device or a chip applied to the first network device. That a first network element performs the method is used as an example. A first network device determines a coverage area of a satellite. The first network device determines interference area information based on a frequency band used by the satellite and a frequency band used by an access network device within the coverage area, where the interference area information includes identification information of at least one access network device within the coverage area, and there is an intersection between a frequency band used by the at least one access network device and the frequency band used by the satellite.

In the foregoing solution, if there is an intersection between a frequency band used by a base station within the coverage area of the satellite and the frequency band used by the satellite, a signal transmitted by the base station is more likely to have relatively great impact on a service of the satellite. Therefore, the first network device determines the base station as a base station that may interfere with the service of the satellite, so that a base station that affects service quality of the satellite can be accurately determined.

In an implementation method, after the interference area information is determined, the first network device or the satellite may indicate a base station indicated by the interference area information to reduce transmit power, or even stop transmitting a signal, to reduce impact on the service quality of the satellite, thereby helping improve the service quality of the satellite.

In a possible implementation method, that the first network device determines the coverage area of the satellite includes: the first network device determines the coverage area based on ephemeris information of the satellite and valid information of a service corresponding to the frequency band used by the satellite, where the coverage area is an earth coverage visibility area of the satellite, and the valid information of the service indicates duration of the service.

In the foregoing solution, the coverage area of the satellite may be accurately determined, thereby helping accurately determine a base station that affects the service quality of the satellite.

In a possible implementation method, that the first network device determines the coverage area based on the ephemeris information of the satellite and the valid information of the service corresponding to the frequency band used by the satellite includes: the first network device determines the coverage area based on the ephemeris information of the satellite, the valid information of the service corresponding to the frequency band used by the satellite, and model information, where the model information is used to indicate to determine the earth coverage visibility area of the satellite.

In a possible implementation method, that the first network device determines the coverage area of the satellite includes: the first network device determines the coverage area based on ephemeris information of the satellite, valid information of a service corresponding to the frequency band used by the satellite, an imaging mode of the service, and an incidence angle of the satellite, where the coverage area is a coverage area of a specific beam of the satellite.

In the foregoing solution, the coverage area of the satellite may be accurately determined, thereby helping accurately determine a base station that affects the service quality of the satellite.

In a possible implementation method, that the first network device determines the coverage area based on the ephemeris information of the satellite, the valid information of the service corresponding to the frequency band used by the satellite, the imaging mode of the service, and the incidence angle of the satellite includes: the first network device determines the coverage area based on the ephemeris information of the satellite, the valid information of the service corresponding to the frequency band used by the satellite, the imaging mode of the service, the incidence angle of the satellite, and model information, where the model information is used to indicate to determine the coverage area of the specific beam of the satellite.

In a possible implementation method, the first network device receives, from a second network device, frequency bands used by one or more access network devices, where the one or more access network devices include an access network device within the coverage area.

In a possible implementation method, the second network device is a network management device.

In a possible implementation method, the second network device is an access network device within the coverage area. The first network device sends a trigger message to a mobility management network element corresponding to the coverage area, where the trigger message includes the coverage area, and the trigger message is used to trigger the mobility management network element to indicate the access network device within the coverage area to send a used frequency band to the first network device. That the first network device receives, from the second network device, the frequency bands used by the one or more access network devices includes: the first network device receives, from the access network device within the coverage area by using the mobility management network element, a frequency band used by the access network device.

In the foregoing solution, the frequency band used by the access network device may be accurately obtained, thereby helping accurately determine a base station that affects the service quality of the satellite.

In a possible implementation method, the trigger message further includes first indication information, the first indication information is used to trigger the mobility management network element to send second indication information to the access network device within the coverage area, and the second indication information is used to indicate the access network device within the coverage area to send the used frequency band to the first network device.

In a possible implementation method, the first network device receives, from a satellite control center, the frequency band used by the satellite.

In the foregoing solution, the frequency band used by the satellite may be accurately obtained, thereby helping accurately determine a base station that affects the service quality of the satellite.

In a possible implementation method, that the first network device determines the interference area information based on the frequency band used by the satellite and the frequency band used by the access network device within the coverage area includes: the first network device determines the interference area information based on the frequency band used by the satellite, the frequency band used by the access network device within the coverage area, and EIRP information of the access network device within the coverage area, where an EIRP value corresponding to EIRP information of the at least one access network device is greater than an EIRP threshold.

In the foregoing solution, interference area information is further determined based on EIRP information of a base station, thereby helping accurately determine a base station that affects the service quality of the satellite.

In a possible implementation method, that the first network device determines the interference area information based on the frequency band used by the satellite, the frequency band used by the access network device within the coverage area, and the EIRP information of the access network device within the coverage area includes: the first network device determines the interference area information based on the frequency band used by the satellite, the frequency band used by the access network device within the coverage area, the EIRP information of the access network device within the coverage area, and model information, where the model information is used to indicate to use the EIRP information to determine the interference area information.

In a possible implementation method, the EIRP information is the EIRP value; or the EIRP information includes information for determining the EIRP value.

In a possible implementation method, the first network device receives the EIRP information from the access network device within the coverage area.

In a possible implementation method, the first network device stores a correspondence between the identification information of the at least one access network device and identification information of the satellite.

In the foregoing solution, the first network device may indicate, based on the stored correspondence, at least one base station in the interference area information to reduce transmit power or stop transmitting a signal within a corresponding time, so as to reduce impact on a service of the satellite.

According to a second aspect, an embodiment of this application provides a communication apparatus. The apparatus may be a first network device, or may be a chip used for a first network device. The apparatus has a function of implementing any implementation method according to the first aspect. The function may be implemented by hardware, or may be implemented by hardware executing corresponding software. The hardware or the software includes one or more modules corresponding to the function.

According to a third aspect, an embodiment of this application provides a communication apparatus, including a processor coupled to a memory. The processor is configured to invoke a program stored in the memory, to perform any implementation method according to the first aspect. The memory may be located inside or outside the apparatus. In addition, there may be one or more processors.

According to a fourth aspect, an embodiment of this application provides a communication apparatus, including a processor and a memory. The memory is configured to store computer instructions, and when the apparatus runs, the processor executes the computer instructions stored in the memory, so that the apparatus performs any implementation method according to the first aspect.

According to a fifth aspect, an embodiment of this application provides a communication apparatus, including units or means (means) configured to perform steps of any implementation method according to the first aspect.

According to a sixth aspect, an embodiment of this application provides a communication apparatus, including a processor and an interface circuit. The processor is configured to: communicate with another apparatus by using the interface circuit, and perform any implementation method according to the first aspect. There are one or more processors.

According to a seventh aspect, an embodiment of this application further provides a computer-readable storage medium. The computer-readable storage medium stores instructions, and when the instructions are run on a communication apparatus, any implementation method according to the first aspect is performed.

According to an eighth aspect, an embodiment of this application further provides a computer program product. The computer program product includes a computer program or instructions. When the computer program or the instructions are run by a communication apparatus, any implementation method according to the first aspect is performed.

According to a ninth aspect, an embodiment of this application further provides a chip system, including: a processor, configured to perform any implementation method according to the first aspect.

According to a tenth aspect, an embodiment of this application further provides a communication system, including a first network device and a second network device. The second network device is configured to send, to the first network device, frequency bands used by one or more access network devices, where the one or more access network devices include an access network device within a coverage area of a satellite. The first network device is configured to: determine the coverage area of the satellite; and determine interference area information based on a frequency band used by the satellite and a frequency band used by the access network device within the coverage area, where the interference area information includes identification information of at least one access network device within the coverage area, and there is an intersection between a frequency band used by the at least one access network device and the frequency band used by the satellite.

According to an eleventh aspect, an embodiment of this application further provides a method for determining interference area information. The method includes: a second network device sends, to a first network device, frequency bands used by one or more access network devices, where the one or more access network devices include an access network device within a coverage area of a satellite; and the first network device determines the coverage area of the satellite, and determines interference area information based on a frequency band used by the satellite and a frequency band used by the access network device within the coverage area, where the interference area information includes identification information of at least one access network device within the coverage area, and there is an intersection between a frequency band used by the at least one access network device and the frequency band used by the satellite.

### BRIEF DESCRIPTION OF DRAWINGS

FIG. 1 is a diagram of a communication system according to an embodiment of this application;
FIG. 2(a) is a diagram of a 5G network architecture based on a service-based architecture;
FIG. 2(b) is a diagram of a 5G network architecture based on a point-to-point interface;
FIG. 3 is a schematic flowchart of a method for determining interference area information according to an embodiment of this application;
FIG. 4 is a diagram of deployment of a first network device according to an embodiment of this application;
FIG. 5 is a diagram of a coverage area of a satellite according to an embodiment of this application;
FIG. 6 is a schematic flowchart of a method for determining interference area information according to an embodiment of this application;
FIG. 7 is a schematic flowchart of a method for determining interference area information according to an embodiment of this application;
FIG. 8 is a schematic flowchart of a method for determining interference area information according to an embodiment of this application;
FIG. 9 is a schematic flowchart of a method for determining interference area information according to an embodiment of this application;
FIG. 10 is a schematic flowchart of a method for determining interference area information according to an embodiment of this application;
FIG. 11 is a schematic flowchart of a method for determining interference area information according to an embodiment of this application;
FIG. 12 is a diagram of a communication apparatus according to an embodiment of this application; and
FIG. 13 is a diagram of a communication apparatus according to an embodiment of this application.

### DESCRIPTION OF EMBODIMENTS

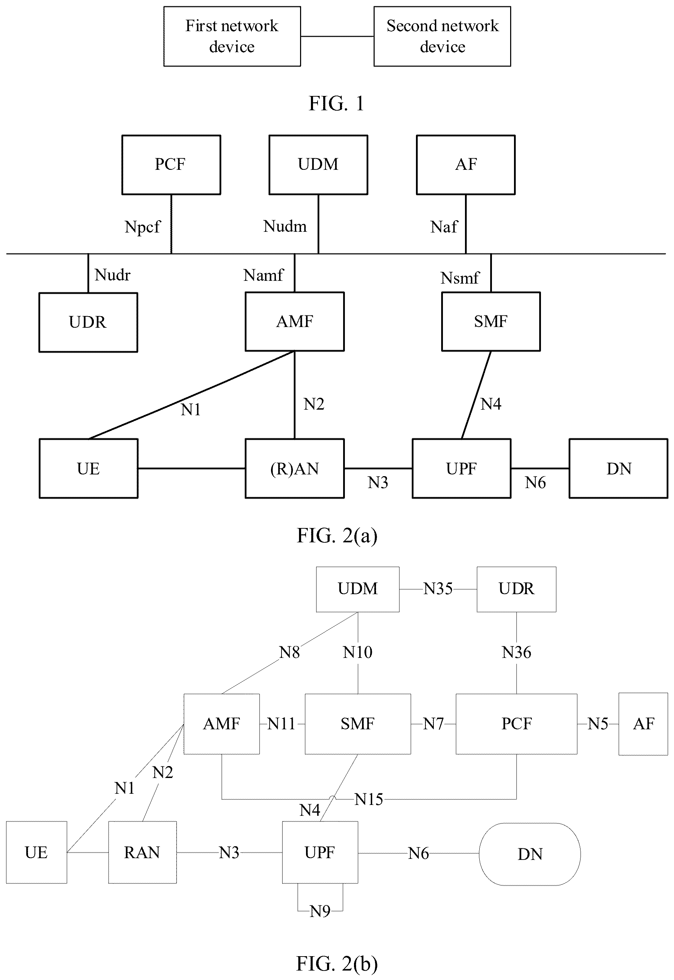

To accurately determine an access network device that affects service quality of a satellite, this application provides a communication system. With reference to FIG. 1, the system includes a first network device and a second network device.

The system shown in FIG. 1 may be used in a 5G network architecture shown in FIG. 2(a) or FIG. 2(b), or certainly, may be used in a future network architecture, for example, a 6^{th} generation (6th generation, 6G) network architecture. This is not limited in this application.

The first network device in FIG. 1 may be a core network element (for example, a session management function (session management function, SMF) network element, an access and mobility management function (access and mobility management function, AMF) network element, a network exposure function (network exposure function, NEF) network element, or an application function (application function, AF) network element) in FIG. 2(a) or FIG. 2(b), or may be a network element that has a function of the core network element in future communication such as 6G communication. This is not limited in this application.

Alternatively, the first network device in FIG. 1 may be a network management device. The network management device may be a network management system (network management system, NMS) device, an element management system (element management system, EMS) device, or the like. This is not limited in this application.

The second network device in FIG. 1 may be an AMF network element, an access network device, a network management device, or the like. This is not limited in this application.

The second network device is configured to send, to the first network device, frequency bands used by one or more access network devices, where the one or more access network devices include an access network device within a coverage area of a satellite. The first network device is configured to: determine the coverage area of the satellite; and determine interference area information based on a frequency band used by the satellite and a frequency band used by the access network device within the coverage area, where the interference area information includes identification information of at least one access network device within the coverage area, and there is an intersection between a frequency band used by the at least one access network device and the frequency band used by the satellite.

In a possible implementation method, that the first network device is configured to determine the coverage area of the satellite specifically includes: the first network device is configured to determine the coverage area based on ephemeris information of the satellite and valid information of a service corresponding to the frequency band used by the satellite, where the coverage area is an earth coverage visibility area of the satellite, and the valid information of the service indicates duration of the service.

In a possible implementation method, that the first network device is configured to determine the coverage area based on the ephemeris information of the satellite and the valid information of the service corresponding to the frequency band used by the satellite specifically includes: the first network device is configured to determine the coverage area based on the ephemeris information of the satellite, the valid information of the service corresponding to the frequency band used by the satellite, and model information, where the model information is used to indicate to determine the earth coverage visibility area of the satellite.

In a possible implementation method, that the first network device is configured to determine the coverage area of the satellite specifically includes: the first network device is configured to determine the coverage area based on ephemeris information of the satellite, valid information of a service corresponding to the frequency band used by the satellite, an imaging mode of the service, and an incidence angle of the satellite, where the coverage area is a coverage area of a specific beam of the satellite.

In a possible implementation method, that the first network device is configured to determine the coverage area based on the ephemeris information of the satellite, the valid information of the service corresponding to the frequency band used by the satellite, the imaging mode of the service, and the incidence angle of the satellite specifically includes: the first network device is configured to determine the coverage area based on the ephemeris information of the satellite, the valid information of the service corresponding to the frequency band used by the satellite, the imaging mode of the service, the incidence angle of the satellite, and model information, where the model information is used to indicate to determine the coverage area of the specific beam of the satellite.

In a possible implementation method, the second network device is a network management device, and the network management device is further configured to receive, from the one or more access network devices, the frequency bands used by the access network devices.

In a possible implementation method, the second network device is a mobility management network element corresponding to the coverage area. The first network device is further configured to send a trigger message to the mobility management network element, where the trigger message includes the coverage area, and the trigger message is used to trigger the mobility management network element to indicate the access network device within the coverage area to send a used frequency band to the first network device. The mobility management network element is further configured to: send a request message to the access network device within the coverage area, where the request message is used to indicate the access network device within the coverage area to send a used frequency band to the first network device; and receive a response message from the access network device within the coverage area, where the response message includes a frequency band used by the access network device within the coverage area. That the second network device is configured to send, to the first network device, the frequency bands used by the one or more access network devices specifically includes: the second network device is configured to send the response message to the first network device.

In a possible implementation method, the first network device is further configured to receive, from a satellite control center, the frequency band used by the satellite.

In a possible implementation method, that the first network device is configured to determine the interference area information based on the frequency band used by the satellite and the frequency band used by the access network device within the coverage area specifically includes: the first network device is configured to determine the interference area information based on the frequency band used by the satellite, the frequency band used by the access network device within the coverage area, and equivalent isotropically radiated power EIRP information of the access network device within the coverage area, where an EIRP value corresponding to EIRP information of the at least one access network device is greater than an EIRP threshold.

In a possible implementation method, that the first network device is configured to determine the interference area information based on the frequency band used by the satellite, the frequency band used by the access network device within the coverage area, and the EIRP information of the access network device within the coverage area specifically includes: the first network device is configured to determine the interference area information based on the frequency band used by the satellite, the frequency band used by the access network device within the coverage area, the EIRP information of the access network device within the coverage area, and model information, where the model information is used to indicate to use the EIRP information to determine the interference area information.

In a possible implementation method, the first network device is further configured to receive the EIRP information from the second network device.

In a possible implementation method, the first network device is further configured to store a correspondence between the identification information of the at least one access network device and identification information of the satellite.

For interaction between network elements in the system and specific execution, refer to the following method embodiments. Details are not described herein. To cope with challenges of wireless broadband technologies and maintain a leading advantage of a 3rd generation partnership project (3rd generation partnership project, 3GPP) network, the 3GPP standard group has formulated a next generation mobile communication network system (next generation system) architecture, which is referred to as a 5G network architecture. The architecture not only supports access to a 5G core network (core network, CN) by using a radio access technology (for example, a long term evolution (long term evolution, LTE) access technology and a 5G radio access network (radio access network, RAN) access technology) defined by the 3GPP standard group, but also supports access to a core network by using a non-3GPP (non-3GPP) access technology through a non-3GPP interworking function (non-3GPP interworking function, N3IWF) or a next generation access gateway (next generation packet data gateway, ngPDG).

FIG. 2(a) is a diagram of a 5G network architecture based on a service-based architecture. The 5G network architecture shown in FIG. 2(a) may include an access network device and a core network device. A terminal device accesses a data network (data network, DN) by using the access network device and the core network device. The core network device includes but is not limited to some or all of the following network elements: an authentication server function (authentication server function, AUSF) network element (not shown in the figure), a unified data management (unified data management, UDM) network element, a unified data repository (unified data repository, UDR) network element, a network repository function (network repository function, NRF) network element (not shown in the figure), an NEF network element (not shown in the figure), an AF network element, a policy control function (policy control function, PCF) network element, an AMF network element, an SMF network element, a user plane function (user plane function, UPF) network element, and a binding support function (binding support function, BSF) network element (not shown in the figure).

The terminal device may be a user equipment (user equipment, UE), a mobile station, a mobile terminal device, or the like. The terminal device may be widely used in various scenarios, for example, device-to-device (device-to-device, D2D), vehicle to everything (vehicle to everything, V2X) communication, machine-type communication (machine-type communication, MTC), an internet of things (internet of things, IOT), virtual reality, augmented reality, industrial control, self-driving, telemedicine, a smart grid, smart furniture, a smart office, smart wearable, smart transportation, and a smart city. The terminal device may be a mobile phone, a tablet computer, a computer having a wireless transceiver function, a wearable device, a vehicle, an urban air transportation vehicle (like an uncrewed aerial vehicle or a helicopter), a ship, a robot, a mechanical arm, a smart home device, or the like. For ease of description, in this application, an example in which a UE is used as the terminal device is used for description, and a UE that appears at any location subsequently may be replaced with a terminal device.

The access network device may be a radio access network device (RAN device) or a wired access network device. The radio access network device includes a 3GPP access network device, an untrusted non-3GPP access network device, and a trusted non-3GPP access network device. The 3GPP access network device includes but is not limited to: an evolved base station (evolved NodeB, eNodeB) in LTE, a next generation base station (next generation NodeB, gNB) in a 5G mobile communication system, a base station or a module or unit that completes some functions of a base station in a future mobile communication system, for example, a central unit (central unit, CU) or a distributed unit (distributed unit, DU). The untrusted non-3GPP access network device includes but is not limited to: an untrusted non-3GPP access gateway or an N3IWF device, an untrusted wireless local area network (wireless local area network, WLAN) access point (access point, AP), a switch, and a router. The trusted non-3GPP access network device includes but is not limited to: a trusted non-3GPP access gateway, a trusted WLAN AP, a switch, and a router. The wired access network device includes but is not limited to: a wireline access gateway (wireline access gateway), a fixed-line phone network device, a switch, and a router. For ease of description, in this application, an example in which a base station is used as the access network device is used for description, and a base station that appears at any location subsequently may be replaced with an access network device.

The base station and the UE may be fixed or movable. The base station and the UE may be deployed on land, including an indoor or outdoor scenario, and a handheld or vehicle-mounted scenario; or may be deployed on water; or may be deployed on an airplane, a balloon, and an artificial satellite in the air. Application scenarios of the base station and the UE are not limited in embodiments of this application.

The AMF network element includes functions such as mobility management or access authentication/authorization. In addition, the AMF network element is further responsible for transferring a user policy between the UE and the PCF.

The SMF network element includes functions such as session management, execution of a control policy delivered by the PCF network element, UPF network element selection, or allocation of an internet protocol (internet protocol, IP) address of the UE.

The UPF network element includes functions such as user plane data forwarding, session/flow-level-based charging statistics collection, or bandwidth limitation.

The UDM network element includes functions such as subscription data management or user access authorization.

The UDR includes functions such as storage and retrieval of subscription data, policy data, application data, or other types of data.

The NEF network element is configured for capability supporting and event exposure.

The AF network element transfers a requirement of an application side for a network side, for example, a QoS requirement or user status event subscription. The AF may be a third-party functional entity, or may be an operator-deployed application service, for example, an IP multimedia subsystem (IP Multimedia Subsystem, IMS) voice call service. The AF network element includes an AF network element in a core network (that is, an AF network element of an operator) and a third-party AF network element (for example, an application server of an enterprise).

The PCF network element includes policy control functions such as being responsible for charging at a session or business flow level, QoS bandwidth assurance and mobility management, and UE policy decision. The PCF network element includes an access and mobility management policy control function (access and mobility management policy control function, AM PCF) network element and a session management policy control function (session management PCF, SM PCF) network element. The AM PCF network element is configured to formulate an AM policy and a user policy for a UE. The AM PCF network element may also be referred to as a policy control function network element that provides a service for a UE (PCF for a UE). The SM PCF network element is configured to formulate a session management policy (session management policy, SM policy) for a session. The SM PCF network element may also be referred to as a policy control function network element that provides a service for a protocol data unit (protocol data unit, PDU) session (PCF for a PDU session).

The NRF network element may be configured to provide a network element discovery function, and provide, based on a request of another network element, network element information corresponding to a network element type. The NRF network element further provides a network element management service, for example, network element registration, update, and deregistration, or network element status subscription and push.

The BSF network element provides functions such as registration/deregistration/update of a BSF service, NRF connection detection, session binding information creation, UE information obtaining, and session binding information query for duplicate IP addresses.

The AUSF network element is responsible for authenticating a user, to determine whether the user or a device is allowed to access a network.

The DN is a network located outside an operator network. A plurality of DNs can access the operator network, and a plurality of services can be deployed on the DN, to provide services such as data and/or voice for a UE. For example, the DN is a private network of an intelligent factory, a sensor mounted in a workshop of the intelligent factory may be the UE, a control server of the sensor is deployed in the DN, and the control server may provide a service for the sensor. The sensor may communicate with the control server, to obtain instructions of the control server, transmit collected sensor data to the control server according to the instructions, and the like. For another example, the DN is an internal office network of a company, a mobile phone or a computer of an employee in the company may be the UE, and the mobile phone or the computer of the employee can access information, a data resource, or the like on the internal office network of the company.

Npcf, Nudr, Nudm, Naf, Namf, and Nsmf in FIG. 2(a) are service-based interfaces respectively provided by the foregoing PCF, UDR, UDM, AF, AMF, and SMF, and are configured to invoke corresponding service-based operations. N1, N2, N3, N4, and N6 are interface sequence numbers. Meanings of these interface sequence numbers are as follows.

(1) N1 is an interface between the AMF network element and the UE, and may be configured to transfer non-access stratum (non-access stratum, NAS) signaling (for example, including a QoS rule from the AMF network element) to the UE, and the like.

(2) N2 is an interface between the AMF network element and the base station, and may be configured to transfer radio bearer control information from a core network side to the base station, and the like.

(3) N3 is an interface between the base station and the UPF network element, and is mainly configured to transfer uplink and downlink user plane data between the base station and the UPF network element.

(4) N4 is an interface between the SMF network element and the UPF network element, and may be configured to transfer information between a control plane and a user plane, including delivery of a forwarding rule, a QoS rule, a traffic statistics collection rule, and the like from the control plane to the user plane, and reporting of user plane information.

(5) N6 is an interface between the UPF network element and the DN, and is configured to transfer uplink and downlink user data flows between the UPF network element and the DN.

FIG. 2(b) is a diagram of a 5G network architecture based on a point-to-point interface. For descriptions of a function of a network element in the 5G network architecture, refer to descriptions of a function of a corresponding network element in FIG. 2(a). Details are not described again. A main difference between FIG. 2(b) and FIG. 2(a) lies in that an interface between control plane network elements in FIG. 2(a) is a service-based interface, and an interface between control plane network elements in FIG. 2(b) is a point-to-point interface.

In the architecture shown in FIG. 2(b), names and functions of interfaces between the network elements are as follows.

(1) For meanings of N1, N2, N3, N4, and N6 interfaces, refer to the foregoing descriptions.

(2) N5 is an interface between an AF network element and a PCF network element, and may be configured to deliver an application service request and report a network event.

(3) N7 is an interface between the PCF network element and an SMF network element, and may be configured to deliver a PDU session granularity control policy and a service data flow granularity control policy.

(4) N8 is an interface between an AMF network element and a UDM network element, and may be used by the AMF network element to obtain subscription data and authentication data related to access and mobility management from the UDM network element, used by the AMF network element to register information related to UE mobility management with the UDM network element, and the like.

(5) N9 is a user plane interface between UPF network elements, and is configured to transfer uplink and downlink user data flows between the UPF network elements.

(6) N10 is an interface between the SMF network element and the UDM network element, and may be used by the SMF network element to obtain subscription data related to session management from the UDM network element, used by the SMF network element to register information related to a UE session with the UDM network element, and the like.

(7) N11 is an interface between the SMF network element and the AMF network element, and may be configured to transfer PDU session tunnel information between the base station and the UPF network element, transfer a control message sent to the UE, transfer radio resource control information sent to the base station, and the like.

(8) N15 is an interface between the PCF network element and the AMF network element, and may be configured to deliver a UE policy and an access control-related policy.

(9) N35 is an interface between the UDM network element and a UDR network element, and may be used by the UDM network element to obtain user subscription data information from the UDR network element.

(10) N36 is an interface between the PCF network element and the UDR network element, and may be used by the PCF network element to obtain policy-related subscription data and application data-related information from the UDR network element.

It may be understood that the foregoing network elements or functions may be network elements in a hardware device, may be software functions running on dedicated hardware, or may be virtualized functions instantiated on a platform (for example, a cloud platform). Optionally, the network element or function may be implemented by one device, or may be jointly implemented by a plurality of devices, or may be a functional module in one device. This is not specifically limited in embodiments of this application.

A mobility management network element and an application function network element in this application may be respectively the AMF network element and the AF network element in FIG. 2(a) or FIG. 2(b), or may be network elements that have functions of the AMF network element and the AF network element in a future communication network such as a 6G network. This is not limited in this application. In this embodiment of this application, an example in which the AMF network element and the AF network element are respectively a mobility management network element and an application function network element is used for description.

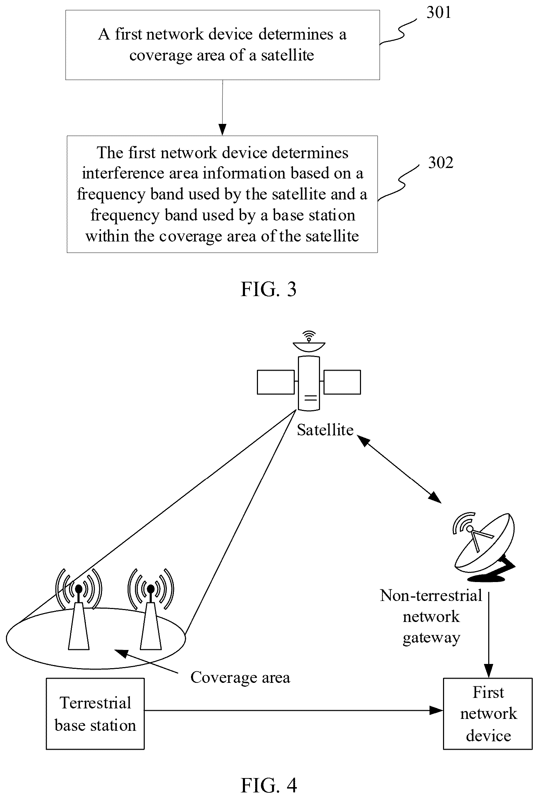

FIG. 3 is a schematic flowchart of a method for determining interference area information according to an embodiment of this application. The method includes the following steps.

### Step 301: A first network device determines a coverage area of a satellite.

FIG. 4 is a diagram of deployment of a first network device according to an embodiment of this application. In this example, the first network device is deployed on the ground, and the first network device may maintain communication with a satellite by using a non-terrestrial network gateway. The first network device may be a core network element (such as an AMF network element, an SMF network element, an NEF network element, or an AF network element), or may be a network management device. It should be noted that the first network device may alternatively be a device deployed on the satellite. This is not limited in this application. In this embodiment of this application, the first network device may also be referred to as a coexistence control function (coexistence control function, CCF) network element, or has another name. This is not limited in this application.

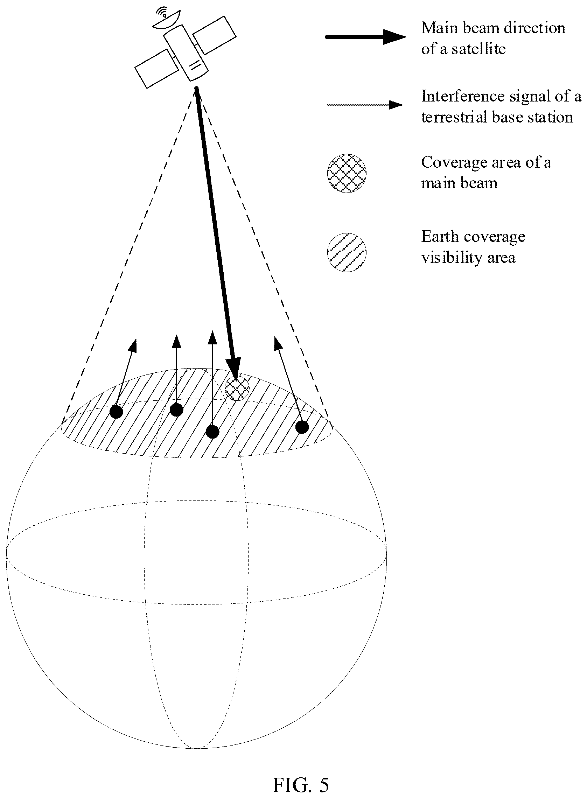

In an implementation method, the coverage area of the satellite is an earth coverage visibility area (Visibility area) of the satellite, or is referred to as a visibility coverage area of the satellite. In still another implementation method, the coverage area of the satellite is a coverage area of a specific beam of the satellite. The specific beam may be, for example, a main beam, or include a main beam and a specified quantity of beams around the main beam. FIG. 5 is a diagram of a coverage area of a satellite according to an embodiment of this application. It may be learned that the earth coverage visibility area of the satellite includes the coverage area of the specific beam of the satellite. Therefore, the earth coverage visibility area of the satellite is generally greater than the coverage area of the specific beam of the satellite. In FIG. 5, an example in which the specific beam is the main beam of the satellite is used for description.

The following describes in detail a method for determining the coverage area of the satellite.

Method 1: The first network device determines the coverage area of the satellite based on ephemeris information of the satellite and valid information of a service corresponding to a frequency band used by the satellite, where the coverage area of the satellite is the earth coverage visibility area of the satellite.

The ephemeris information of the satellite includes at least one of the following information: a flight speed and a flight orbit of the satellite. The ephemeris information of the satellite may be used to determine a flight trajectory of the satellite.

The valid information of the service is used to indicate duration of the service. For example, the valid information of the service includes a start time and an end time of the service, or includes a start time and duration of the service, or includes duration and an end time of the service.

A frequency band used by the satellite to perform a specific service is referred to as a frequency band corresponding to the service. In other words, there is a correspondence between the frequency band used by the satellite and the service performed by the satellite.

Method 2: The first network device determines the coverage area of the satellite based on ephemeris information of the satellite, valid information of a service corresponding to a frequency band used by the satellite, an imaging mode of the service, and an incidence angle of the satellite, where the coverage area of the satellite is the coverage area of the specific beam of the satellite.

Meanings of the ephemeris information of the satellite and the valid information of the service are the same as those described in Method 1.

The imaging mode of the service may be a spotlight mode, a stripe mode, a scanning mode, or the like. Beams projected onto the ground have different shapes and coverage areas in different imaging modes. As a result, quantities of terrestrial base stations within the coverage areas of the beams are also different.

The incidence angle of the satellite is used to determine a beam coverage of the specific beam of the satellite.

In Method 2, the imaging mode of the service and the valid information of the service may be collectively referred to as information about the service.

In an implementation method, the first network device may determine, based on the received model information, to determine the coverage area of the satellite by using Method 1 or Method 2. For example, when the model information is used to indicate to determine the earth coverage visibility area of the satellite, the first network device determines the earth coverage visibility area of the satellite by using Method 1. To be specific, Method 1 is specifically as follows: The first network device determines the earth coverage visibility area of the satellite based on the ephemeris information of the satellite, the valid information of the service corresponding to the frequency band used by the satellite, and the model information. For another example, when the model information is used to indicate to determine the coverage area of the specific beam of the satellite, the first network device determines the coverage area of the specific beam of the satellite by using Method 2. To be specific, Method 2 is specifically as follows: The first network device determines the coverage area of the specific beam of the satellite based on the ephemeris information of the satellite, the valid information of the service corresponding to the frequency band used by the satellite, the imaging mode of the service, the incidence angle of the satellite, and the model information.

In an implementation method, the first network device may receive the model information, the valid information of the service, the imaging mode of the service, and the incidence angle of the satellite from the satellite control center. Alternatively, the first network device obtains the model information, the valid information of the service, the imaging mode of the service, and the incidence angle of the satellite from the satellite by using the non-terrestrial network gateway.

For the ephemeris information of the satellite, the first network device may obtain the ephemeris information of the satellite from the satellite control center, or may obtain the ephemeris information of the satellite from another network element, or may obtain the ephemeris information of the satellite from the satellite by using the non-terrestrial network gateway, or may locally store the ephemeris information of the satellite in the first network device.

Step 302: The first network device determines interference area information based on the frequency band used by the satellite and a frequency band used by a base station within the coverage area of the satellite, where the interference area information includes identification information of at least one base station within the coverage area of the satellite, and there is an intersection between a frequency band used by the at least one base station and the frequency band used by the satellite.

The frequency band used by the satellite is a frequency band used when the satellite performs a specific service, and the service may be any type of service. For example, the satellite is an earth exploration satellite service (earth exploration satellite service, EESS), and when performing an earth exploration service, the satellite uses a specific frequency band for earth exploration. In an implementation method, the first network device may receive, from the satellite control center, the frequency band used by the satellite.

The base station within the coverage area of the satellite is a terrestrial base station within the coverage area of the satellite. With reference to FIG. 4, when there are one or more terrestrial base stations within the coverage area of the satellite, a signal transmitted by the terrestrial base station causes interference to a signal of the satellite. Therefore, for the satellite, a signal of the terrestrial base station within the coverage area may be an interference signal. Certainly, if the signal of the terrestrial base station is weak and does not affect a service of the satellite, the signal of the terrestrial base station may not be considered as an interference signal.

The following provides descriptions by using an example. It is assumed that there are 10 terrestrial base stations within the coverage area of the satellite, which are respectively a base station 1 to a base station 10. A frequency band used by the base station 1 to the base station 5 in the 10 base stations has an intersection with a frequency band used when the satellite performs a service. In this case, the first network device determines that interference area information corresponding to the service includes identification information of the base station 1 to the base station 5. It may be understood as that transmit signals of the base station 1 to the base station 5 may affect quality of the service.

In an implementation method, when determining the interference area information, the first network device further determining the interference area information with reference to equivalent isotropically radiated power (equivalent isotropically radiated power, EIRP) information of the base station within the coverage area of the satellite. To be specific, the first network device determines the interference area information based on the frequency band used by the satellite, the frequency band used by the base station within the coverage area of the satellite, and the EIRP information of the base station within the coverage area of the satellite. The EIRP information of the base station within the coverage area of the satellite may be an EIRP value of the base station, or may be information used to determine an EIRP value of the base station. For example, when the EIRP information includes transmit power of the base station, a transmit gain of the base station, and a line loss, the EIRP value of the base station equals the transmit power of the base station plus the transmit gain of the base station minus the line loss. Based on the implementation method, an EIRP value corresponding to a base station indicated by the interference area information that is determined by the first network device is greater than an EIRP threshold.

The following provides descriptions by using an example. It is assumed that there are 10 terrestrial base stations within the coverage area of the satellite, which are respectively a base station 1 to a base station 10. A frequency band used by the base station 1 to the base station 5 in the 10 base stations has an intersection with a frequency band used when the satellite performs a service, EIRP values of the base station 1 to the base station 3 each are greater than the EIRP threshold, and EIRP values of the base station 4 and the base station 5 each are less than the EIRP threshold. In this case, the first network device determines that interference area information corresponding to the service includes identification information of the base station 1 to the base station 3. It may be understood as that transmit signals of the base station 1 to the base station 3 may affect quality of the service. Although a frequency band used by the base station 4 and the base station 5 has an intersection with the frequency band used when the satellite performs the service, because the EIRP values of the base station 4 and the base station 5 are less than the EIRP threshold, it may be considered that interference of signals of the base station 4 and the base station 5 to a signal of the satellite is not great, and in this way, the base station 4 and the base station 5 may not be considered as base stations that affect the service of the satellite.

In an implementation method, if the first network device receives the model information, the first network device may determine the interference area information with reference to the model information. For example, if the model information further indicates to use the EIRP information to determine the interference area information, the first network device determines the interference area information based on the frequency band used by the satellite, the frequency band used by the base station within the coverage area of the satellite, and the EIRP information of the base station within the coverage area of the satellite. For another example, if the model information does not indicate to use the EIRP information to determine the interference area information, the first network device determines the interference area information based on the frequency band used by the satellite and the frequency band used by the base station within the coverage area of the satellite.

In an implementation method, after determining the interference area information, the first network device may further store a correspondence between identification information of the satellite and the identification information of the at least one base station in the interference area information. The identification information of the satellite may be information such as an ID or an address of the satellite, and the identification information of the base station may be information such as an ID or an address of the base station. Subsequently, the first network device may indicate, based on the stored correspondence, the at least one base station in the interference area information to reduce transmit power or stop transmitting a signal within a corresponding time, so as to reduce impact on the service of the satellite.

For example, the correspondence that is between the identification information of the satellite and the identification information of the at least one base station in the interference area information and that is stored by the first network device may be stored as any one of Table 1, Table 2, and Table 3, or may be stored in another manner.

**Table 1**

| Identification information of the satellite | Interference area information | Frequency band used by the satellite |
|---|---|---|
| SAT#1 | Interference area 1 (base station 1, base station 2) | 10 GHz to 10.4 GHz |
| | Interference area 2 (base station 3, base station 4) | 10 GHz to 10.4 GHz |
| | Interference area 3 (base station 5, base station 6) | 11 GHz to 11.5 GHz |
| | Interference area 4 (base station 7, base station 8) | 11 GHz to 11.5 GHz |

**Table 2**

| Identification information of the satellite | Interference area information | Frequency band used by the satellite | Time range of the service |
|---|---|---|---|
| SAT#1 | Interference area 1 (base station 1, base station 2) | 10 GHz to 10.4 GHz | T1 to T2 |
| | Interference area 2 (base station 3, base station 4) | 10 GHz to 10.4 GHz | T3 to T4 |
| | Interference area 3 (base station 5, base station 6) | 11 GHz to 11.5 GHz | T5 to T6 |
| | Interference area 4 (base station 7, base station 8) | 11 GHz to 11.5 GHz | T7 to T8 |

**Table 3**

| Identification information of the satellite | Interference area information | Frequency band used by the satellite | Time range of the service | Identification information of the service |
|---|---|---|---|---|
| SAT#1 | Interference area 1 (base station 1, base station 2) | 10 GHz to 10.4 GHz | T1 to T2 | Service#1 |
| | Interference area 2 (base station 3, base station 4) | 10 GHz to 10.4 GHz | T3 to T4 | Service#1 |
| | Interference area 3 (base station 5, base station 6) | 11 GHz to 11.5 GHz | T5 to T6 | Service #2 |
| | Interference area 4 (base station 7, base station 8) | 11 GHz to 11.5 GHz | T7 to T8 | Service #3 |

The following describes different implementation methods for obtaining, by the first network device, the frequency band used by the base station within the coverage area of the satellite and the EIRP information of the base station.

Method 1: A network management device (the network management device is also referred to as the second network device) sends information about one or more base stations to the first network device, where the information about the base stations includes identification information of the base stations, location information of the base stations, and frequency bands used by the base stations, and optionally, further includes EIRP information of the base stations. The first network device determines, from the one or more base stations based on the coverage area of the satellite and the location information of the one or more base stations, a base station located within the coverage area of the satellite, and obtains identification information, a used frequency band, and EIRP information of the base station within the coverage area of the satellite.

The following provides descriptions by using an example. For example, the network management device stores information about a base station 1 to a base station 10, and the information about each of the base stations includes identification information of the base station, location information of the base station, and a frequency band used by the base station, and optionally, further includes EIRP information of the base station. Then, the network management device sends the information about the base station 1 to the base station 10 to the first network device. The first network device selects, from the base station 1 to the base station 10 based on the location information of the base station 1 to the base station 10 and the coverage area of the satellite, a base station located in the coverage area of the satellite. For example, the base station 1 to the base station 5 are located in the coverage area of the satellite, the first network device then obtains identification information, a used frequency band, and EIRP information of the base station 1 to the base station 5.

Method 2: The first network device sends the coverage area of the satellite to a network management device (the network management device is also referred to as the second network device), and the network management device determines, based on the coverage area of the satellite and location information in information that is about a base station and that is stored in the network management device, a base station located within the coverage area of the satellite, and then sends information about a base station located within the coverage area of the satellite to the first network device. The information about the base station includes identification information of the base station and a frequency band used by the base station, and optionally, further includes EIRP information of the base station.

The following provides descriptions by using an example. For example, the network management device stores information about a base station 1 to a base station 10, and the information about each of the base stations includes identification information of the base station, location information of the base station, and a frequency band used by the base station, and optionally, further includes EIRP information of the base station. The first network device sends the coverage area of the satellite to the network management device. The network management device selects, from the base station 1 to the base station 10 based on the location information of the base station 1 to the base station 10 and the coverage area of the satellite, a base station located in the coverage area of the satellite. For example, the base station 1 to the base station 5 are located in the coverage area of the satellite. Then, the network management device sends information about the base station 1 to the base station 5 to the first network device. The information about each of the base stations includes identification information of the base station and a used frequency band, and optionally, further includes EIRP information of the base station.

Method 3: One or more base stations send information about the one or more base stations to the first network device, where the information about the base stations includes identification information of the base stations, location information of the base stations, and frequency bands used by the base stations, and optionally, further includes EIRP information of the base stations. The first network device determines, from the one or more base stations based on the coverage area of the satellite and the location information of the one or more base stations, a base station located within the coverage area of the satellite, and obtains identification information, a used frequency band, and EIRP information of the base station within the coverage area of the satellite.

The following provides descriptions by using an example. For example, the base station 1 to the base station 10 separately send the information about the base stations to the first network device. To be specific, the base station 1 sends information about the base station 1 to the first network device, the base station 2 sends information about the base station 2 to the first network device, and so on. The base station 1 is used as an example. The information of the base station 1 that is sent by the base station 1 includes identification information of the base station 1, location information of the base station 1, and a frequency band used by the base station 1, and optionally, further includes EIRP information of the base station 1. Then, the first network device selects, from the base station 1 to the base station 10 based on location information of the base station 1 to the base station 10 and the coverage area of the satellite, a base station located in the coverage area of the satellite. For example, the base station 1 to the base station 5 are located in the coverage area of the satellite, the first network device then obtains identification information, a used frequency band, and EIRP information of the base station 1 to the base station 5.

Method 4: The first network device sends a trigger message to an AMF network element (the AMF network element is also referred to as the second network device) corresponding to the coverage area of the satellite, where the trigger message includes the coverage area of the satellite, and the trigger message is used to trigger the AMF network element to indicate a base station within the coverage area of the satellite to send a used frequency band to the first network device. Then, the AMF network element determines, based on the coverage area of the satellite and location information in information that is about a base station and that is stored in the AMF network element, a base station located within the coverage area of the satellite, and then, the AMF network element sends a request message to the base station within the coverage area of the satellite, where the request message is used to indicate the base station to send a used frequency band to the first network device. The base station receiving the request message sends a response message to the AMF network element. The response message includes identification information of the base station and a frequency band used by the base station. Optionally, the response message further includes EIRP information of the base station. Then, the AMF network element forwards the received response message to the first network device.

In an implementation method, the trigger message includes first indication information, the first indication information is used to trigger the AMF to send second indication information to the base station within the coverage area of the satellite. The second indication information is used to indicate the base station within the coverage area to send a used frequency band to the first network device. The request message sent by the AMF network element to the base station within the coverage area of the satellite carries the second indication information.

The following provides descriptions by using an example. The first network device sends a trigger message to a corresponding AMF network element within the coverage area of the satellite, where the trigger message includes the coverage area of the satellite, and the AMF network element selects, based on the coverage area of the satellite and location information in information that is about a base station and that is stored in the AMF network element, a base station located in the coverage area of the satellite. For example, the AMF network element stores information about a base station 1 to a base station 10, and the information about each of the base stations includes identification information of the base station, location information of the base station, and a frequency band used by the base station, and optionally, further includes EIRP information of the base station. The AMF network element selects, from the base station 1 to the base station 10 based on the location information of the base station 1 to the base station 10 and the coverage area of the satellite, a base station located in the coverage area of the satellite. For example, the base station 1 to the base station 5 are located in the coverage area of the satellite. Then, the AMF network element separately sends request messages to the base station 1 to the base station 5. The request message is used to request the base station to send a frequency band used by the base station to the first network device, and optionally, further send EIRP information of the base station. Then, the base station 1 to the base station 5 separately send response messages to the AMF network element, where the response messages include identification information of the base station and the frequency band used by the base station, and optionally, further include the EIRP information of the base station. Then, the AMF network element forwards the received response messages to the first network device.

In the foregoing solution, if there is an intersection between a frequency band used by a base station within the coverage area of the satellite and the frequency band used by the satellite, a signal transmitted by the base station is more likely to have relatively great impact on a service of the satellite. Therefore, the first network device determines the base station as a base station that may interfere with the service of the satellite, so that a base station that affects service quality of the satellite can be accurately determined.

In an implementation method, after the interference area information is determined, the first network device or the satellite may indicate a base station indicated by the interference area information to reduce transmit power, or even stop transmitting a signal, to reduce impact on the service quality of the satellite, thereby helping improve the service quality of the satellite.

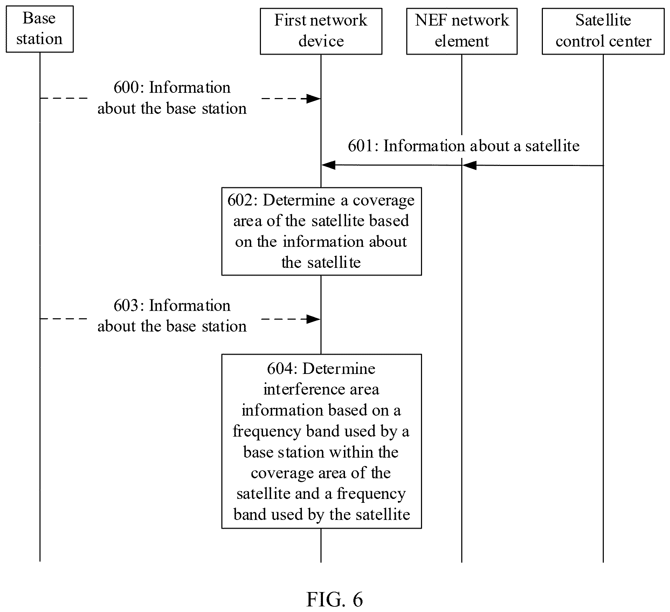

The following describes the embodiment of FIG. 3 with reference to specific embodiments of FIG. 6 to FIG. 11.

FIG. 6 is a schematic flowchart of a method for determining interference area information according to an embodiment of this application. The method includes the following steps.

Step 600: A base station sends information about the base station to a first network device. Correspondingly, the first network device receives the information about the base station.

Step 600 is an optional step.

The information about the base station includes identification information of the base station, a frequency band used by the base station, and location information of the base station, and optionally, further includes EIRP information of the base station, where the EIRP information is an EIRP value of the base station or information used for calculating an EIRP value.

In an implementation method, the base station may add information about the base station to a registration request message or an update request message, and send the registration request message or the update request message to the first network device.

The base station herein is a terrestrial base station, and there may be one or more base stations.

Step 601: When a satellite has a service, a satellite control center sends information about the satellite to the first network device by using an NEF network element. Correspondingly, the first network device receives the information about the satellite.

The satellite control center may be located on the ground, or may be located on the satellite. It should be noted that the satellite control center in this embodiment may be replaced with the satellite, or the satellite may provide the information about the satellite for the first network device.

The information about the satellite includes identification information of the satellite, a frequency band used by the satellite, information about a service corresponding to the frequency band, and model information. Optionally, the information about the satellite further includes ephemeris information and/or an incidence angle of the satellite.

The information about the service includes valid information of the service, and optionally, further includes an imaging mode of the service. For meanings of the valid information of the service and the imaging mode of the service, refer to the descriptions in the embodiment of FIG. 3.

The model information indicates a manner of demarcating an interference area. For example, the model information is used to indicate to determine an earth coverage visibility area of the satellite, or is used to indicate to determine a coverage area of a specific beam of the satellite. Optionally, the model information further indicates whether interference area information needs to be determined based on EIRP information of the base station.

The incidence angle is used to determine a beam coverage of the specific beam of the satellite.

In an implementation method, the satellite control center may add the information about the satellite to a registration request message or an update request message, and send the registration request message or the update request message to the first network device.

Step 602: The first network device determines a coverage area of the satellite based on the information about the satellite.

For a specific implementation of step 602, refer to step 301 in the embodiment of FIG. 3.

Step 603: The first network device triggers a base station within the coverage area of the satellite to send information about the base station to the first network device. Correspondingly, the first network device receives the information about the base station.

The information about the base station in step 603 is the same as the information about the base station in step 600.

Step 603 is an optional step. Either step 603 or step 600 is performed. When step 600 is performed, the base station in step 600 may be a base station within the coverage area of the satellite and/or one or more base stations outside the coverage area of the satellite. When step 603 is performed, the base station in step 603 is one or more base stations within the coverage area of the satellite.

Step 604: The first network device determines the interference area information based on a frequency band used by the base station within the coverage area of the satellite and a frequency band used by the satellite.

For a specific implementation of step 604, refer to the description of step 302 in the embodiment of FIG. 3. Details are not described again.

For beneficial effects of the embodiment of FIG. 6, refer to the beneficial effects of the embodiment of FIG. 3. Details are not described again.

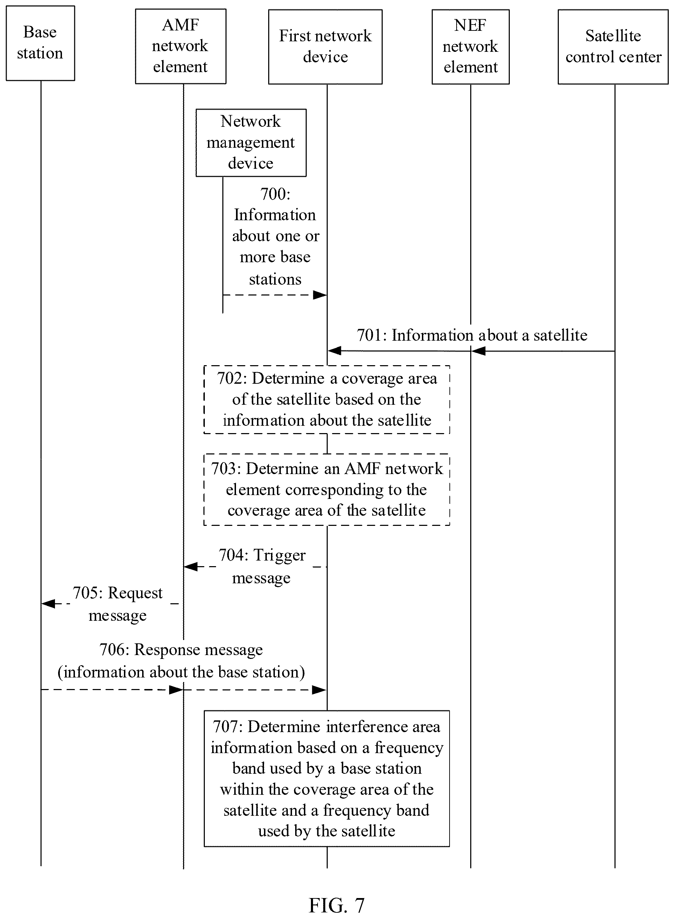

FIG. 7 is a schematic flowchart of a method for determining interference area information according to an embodiment of this application. The embodiment of FIG. 7 is a specific implementation of the embodiment of FIG. 6. In the embodiment of FIG. 7, a first network device is a core network element (for example, an SMF network element). In other words, a network element in the core network element is used as the first network device.

Step 700: A network management device sends information about one or more base stations to the first network device. Correspondingly, the first network device receives the information about the one or more base stations.

Step 700 is an optional step.

The information about the base station in step 700 is the same as the information about the base station in step 600 in the embodiment of FIG. 6. Refer to the foregoing description.

In an implementation method, when the base station registers the information about the base station with a network management device for the first time, the network management device is triggered to perform step 700.

In still another implementation method, when the base station updates the information that is about the base station and that is stored in the network management device, the network management device is triggered to perform step 700.

Step 701: When a satellite has a service, a satellite control center sends information about the satellite to the first network device by using an NEF network element. Correspondingly, the first network device receives the information about the satellite.

Step 701 is the same as step 601 in the embodiment of FIG. 6. Refer to the foregoing description.

Step 702: The first network device determines a coverage area of the satellite based on the information about the satellite.

Step 702 is the same as step 602 in the embodiment of FIG. 6. Refer to the foregoing description.

Step 703: The first network device determines an AMF network element corresponding to the coverage area of the satellite.

In an implementation method, the first network device determines, based on the coverage area of the satellite, the AMF network element corresponding to the coverage area of the satellite. There may be one or more AMF network elements.

In still another implementation method, the first network device sends the coverage area of the satellite to the NRF network element, and the NRF network element determines the AMF network element corresponding to the coverage area of the satellite, and sends, to the first network device, identification information of the determined AMF network element corresponding to the coverage area of the satellite. There may be one or more AMF network elements.

It should be noted that when there is only one AMF network element, step 703 may not be performed. Therefore, step 704 is directly performed after step 702.

Step 704: The first network device sends a trigger message to the AMF network element corresponding to the coverage area of the satellite. Correspondingly, the AMF network element receives the trigger message.

The trigger message includes the coverage area of the satellite, and the trigger message is used to trigger the AMF network element to indicate a base station within the coverage area of the satellite to send a used frequency band to the first network device.

Optionally, the trigger message includes first indication information, the first indication information is used to indicate the AMF network element to send second indication information to the base station within the coverage area of the satellite. The second indication information is used to indicate the base station within the coverage area of the satellite to send a used frequency band to the first network device.

Step 705: The AMF network element sends a request message to the base station within the coverage area of the satellite. Correspondingly, the base station receives the request message.

The request message is used to indicate the base station within the coverage area of the satellite to send a used frequency band to the first network device. In an implementation method, the request message includes the second indication information.

The AMF network element may determine the base station within the coverage area of the satellite according to any one of the following methods:

Method 1: The AMF network element stores location information of a base station registered with the AMF network element, and the AMF network element determines, based on the location information of the base station and the coverage area of the satellite, a base station within the coverage area of the satellite.

Method 2: The AMF network element sends the coverage area of the satellite to a UDM network element or a UDR network element. The UDM network element or the UDR network element determines a base station that is located in the coverage area of the satellite and that is associated with the AMF network element, and then sends the determined base station to the AMF network element.

Step 706: The base station sends a response message to the first network device through the AMF network element. Correspondingly, the first network device receives the response message.

The response message includes information about the base station. The information about the base station in step 706 is the same as the information about the base station in step 700.

Step 702 to step 706 are all optional steps.

When step 700 is performed, step 702 to step 706 may not be performed. When step 702 to step 706 are performed, step 700 may not be performed.

When step 700 is performed, the base station in step 700 may be a base station within the coverage area of the satellite and/or one or more base stations outside the coverage area of the satellite. When step 702 to step 706 are performed, the base station in step 706 is one or more base stations within the coverage area of the satellite.

Step 707: The first network device determines interference area information based on a frequency band used by the base station within the coverage area of the satellite and a frequency band used by the satellite.

Step 707 is the same as step 604 in the embodiment of FIG. 6. Refer to the foregoing description.

It should be noted that if the first network device uses EIRP information when determining the coverage area of the satellite, the EIRP information may be carried in the information about the base station in step 700, or may be carried in the information about the base station in step 706. Alternatively, the first network device sends, to the base station after step 706, a request message for requesting EIRP information, and then, the base station sends EIRP information of the base station to the first network device based on the request message. Therefore, the first network device may obtain the EIRP information of the base station in any one of the foregoing three manners.

For beneficial effects of the embodiment of FIG. 7, refer to the beneficial effects of the embodiment of FIG. 3. Details are not described again.

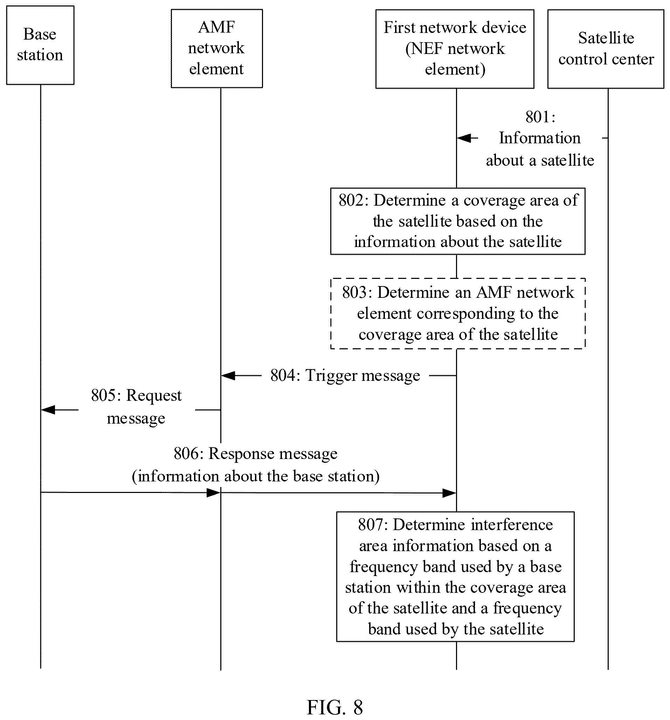

FIG. 8 is a schematic flowchart of a method for determining interference area information according to an embodiment of this application. The embodiment of FIG. 8 is a specific implementation of the embodiment of FIG. 6. In the embodiment of FIG. 8, a first network device is an NEF network element. In other words, the NEF network element is used as the first network device.

The method includes the following steps.

Step 801: When a satellite has a service, a satellite control center sends information about the satellite to the NEF network element. Correspondingly, the NEF network element receives the information about the satellite.

The information about the satellite in step 801 is the same as the information about the satellite in step 601 in the embodiment of FIG. 6. Refer to the foregoing description.

Step 802: The NEF network element determines a coverage area of the satellite based on the information about the satellite.

A method for determining the coverage area of the satellite by the NEF in step 802 is the same as a method for determining the coverage area of the satellite by the first network device in step 602 in the embodiment of FIG. 6. Refer to the foregoing description.

Step 803: The NEF network element determines an AMF network element corresponding to the coverage area of the satellite.

For a method for determining, by the NEF, the AMF network element corresponding to the coverage area of the satellite, refer to the method for determining, by the first network device, the AMF network element corresponding to the coverage area of the satellite in step 703 in the embodiment of FIG. 7. Details are not described again.

It should be noted that when there is only one AMF network element, step 803 may not be performed. Therefore, step 804 is directly performed after step 802.

Step 804: The NEF network element sends a trigger message to the AMF network element corresponding to the coverage area of the satellite. Correspondingly, the AMF network element receives the trigger message.

The trigger message includes the coverage area of the satellite, and the trigger message is used to trigger the AMF network element to indicate a base station within the coverage area of the satellite to send a used frequency band to the first network device.

Optionally, the trigger message includes first indication information, the first indication information is used to indicate the AMF network element to send second indication information to the base station within the coverage area of the satellite. The second indication information is used to indicate the base station within the coverage area of the satellite to send a used frequency band to the first network device.

Step 805: The AMF network element sends a request message to the base station within the coverage area of the satellite. Correspondingly, the base station receives the request message.

Step 805 is the same as step 705 in the embodiment of FIG. 7. Refer to the foregoing description.

Step 806: The base station sends a response message to the NEF network element through the AMF network element. Correspondingly, the NEF network element receives the response message.

The response message includes information about the base station. For the information about the base station, refer to the description of the information about the base station in step 600 in the embodiment of FIG. 6. Details are not described again.

Step 807: The NEF network element determines interference area information based on a frequency band used by the base station within the coverage area of the satellite and a frequency band used by the satellite.

A method for determining the interference area information by the NEF network element in step 807 is the same as the method for determining the interference area information by the first network device in step 604 in the embodiment of FIG. 6. Refer to the foregoing description.

For beneficial effects of the embodiment of FIG. 8, refer to the beneficial effects of the embodiment of FIG. 3. Details are not described again.

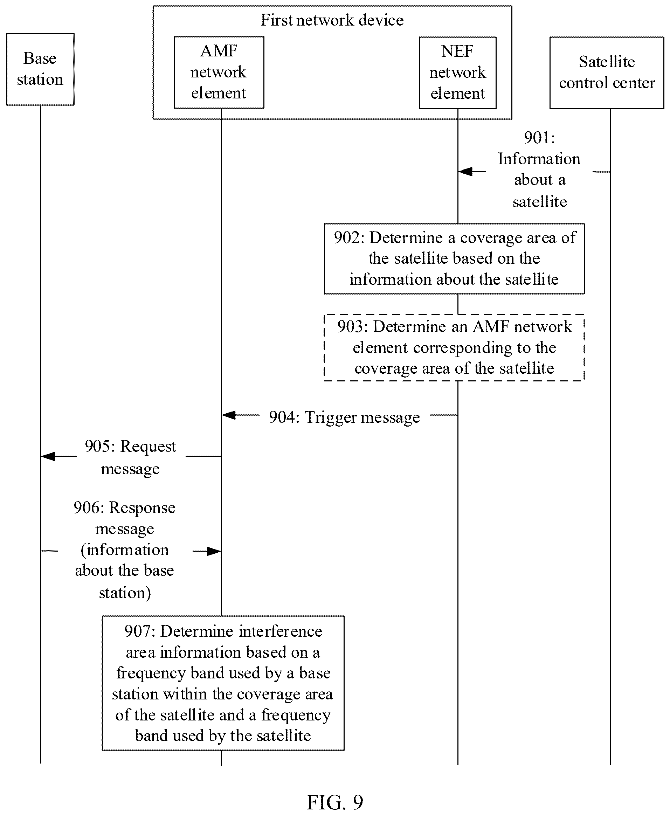

FIG. 9 is a schematic flowchart of a method for determining interference area information according to an embodiment of this application. The embodiment of FIG. 9 is a specific implementation of the embodiment of FIG. 6. In the embodiment of FIG. 9, a first network device includes an AMF network element and an NEF network element. In other words, the AMF network element and the NEF network element jointly implement functions of the first network device in the embodiment of FIG. 3.

The method includes the following steps.

Step 901 to step 903 are the same as step 801 to step 803 in the embodiment of FIG. 8.

It should be noted that when there is only one AMF network element, step 903 may not be performed. Therefore, step 904 is directly performed after step 902.

Step 904: The NEF network element sends a trigger message to the AMF network element corresponding to the coverage area of the satellite. Correspondingly, the AMF network element receives the trigger message.

The trigger message includes the coverage area of the satellite, and the trigger message is used to trigger the AMF network element to indicate a base station within the coverage area of the satellite to send a used frequency band to the first network device.

Optionally, the trigger message includes first indication information, the first indication information is used to indicate the AMF network element to send second indication information to the base station within the coverage area of the satellite. The second indication information is used to indicate the base station within the coverage area of the satellite to send a used frequency band to the first network device.

Step 905: The AMF network element sends a request message to the base station within the coverage area of the satellite. Correspondingly, the base station receives the request message.

Step 905 is the same as step 805 in the embodiment of FIG. 8. Refer to the foregoing description.

Step 906: The base station sends a response message to the AMF network element. Correspondingly, the AMF network element receives the response message.

The response message includes information about the base station. For the information about the base station, refer to the description of the information about the base station in step 600 in the embodiment of FIG. 6. Details are not described again.

Step 907: The AMF network element determines interference area information based on a frequency band used by the base station within the coverage area of the satellite and a frequency band used by the satellite.

A method for determining the interference area information by the AMF network element in step 907 is the same as the method for determining the interference area information by the first network device in step 604 in the embodiment of FIG. 6. Refer to the foregoing description.

For beneficial effects of the embodiment of FIG. 9, refer to the beneficial effects of the embodiment of FIG. 3. Details are not described again.

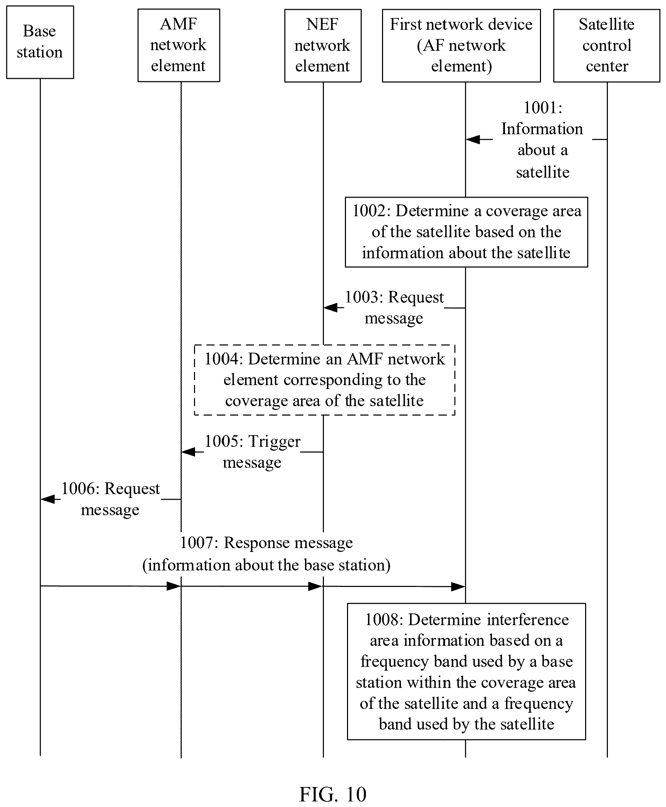

FIG. 10 is a schematic flowchart of a method for determining interference area information according to an embodiment of this application. The embodiment of FIG. 10 is a specific implementation of the embodiment of FIG. 6. In the embodiment of FIG. 10, a first network device is an AF network element. In other words, the AF network element is used as the first network device.

The method includes the following steps.

Step 1001: When a satellite has a service, a satellite control center sends information about the satellite to the AF network element. Correspondingly, the AF network element receives the information about the satellite.

The information about the satellite in step 1001 is the same as the information about the satellite in step 601 in the embodiment of FIG. 6. Refer to the foregoing description.

Step 1002: The AF network element determines a coverage area of the satellite based on the information about the satellite.

A method for determining the coverage area of the satellite by the AF network element in step 1002 is the same as a method for determining the coverage area of the satellite by the first network device in step 602 in the embodiment of FIG. 6. Refer to the foregoing description.

Step 1003: The AF network element sends a request message to an NEF network element. Correspondingly, the NEF network element receives the request message.

The request message includes identification information of the AF network element and the coverage area of the satellite. Optionally, the request message further includes first indication information, the first indication information is used to indicate the AMF network element to send second indication information to the base station within the coverage area of the satellite. The second indication information is used to indicate the base station within the coverage area of the satellite to send a used frequency band to the first network device.

Step 1004: The NEF network element determines an AMF network element corresponding to the coverage area of the satellite.

For a method for determining, by the NEF network element, the AMF network element corresponding to the coverage area of the satellite, refer to the method for determining, by the first network device, the AMF network element corresponding to the coverage area of the satellite in step 703 in the embodiment of FIG. 7. Details are not described again.

It should be noted that when there is only one AMF network element, step 1004 may not be performed. Therefore, step 1005 is directly performed after step 1003.

Step 1005: The NEF network element sends a trigger message to the AMF network element corresponding to the coverage area of the satellite. Correspondingly, the AMF network element receives the trigger message.

The trigger message includes the coverage area of the satellite, and the trigger message is used to trigger the AMF network element to indicate a base station within the coverage area of the satellite to send a used frequency band to the first network device.

Optionally, the trigger message includes first indication information, the first indication information is used to indicate the AMF network element to send second indication information to the base station within the coverage area of the satellite. The second indication information is used to indicate the base station within the coverage area of the satellite to send a used frequency band to the first network device.

Step 1006: The AMF network element sends a request message to the base station within the coverage area of the satellite. Correspondingly, the base station receives the request message.

Step 1006 is the same as step 705 in the embodiment of FIG. 7. Refer to the foregoing description.

Step 1007: The base station sends a response message to the AF network element through the AMF network element and the NEF network element. Correspondingly, the AF network element receives the response message.

The response message includes information about the base station. For the information about the base station, refer to the description of the information about the base station in step 600 in the embodiment of FIG. 6. Details are not described again.

Step 1008: The AF network element determines interference area information based on a frequency band used by the base station within the coverage area of the satellite and a frequency band used by the satellite.

A method for determining the interference area information by the AF network element in step 1008 is the same as the method for determining the interference area information by the first network device in step 604 in the embodiment of FIG. 6. Refer to the foregoing description.

For beneficial effects of the embodiment of FIG. 10, refer to the beneficial effects of the embodiment of FIG. 3. Details are not described again.

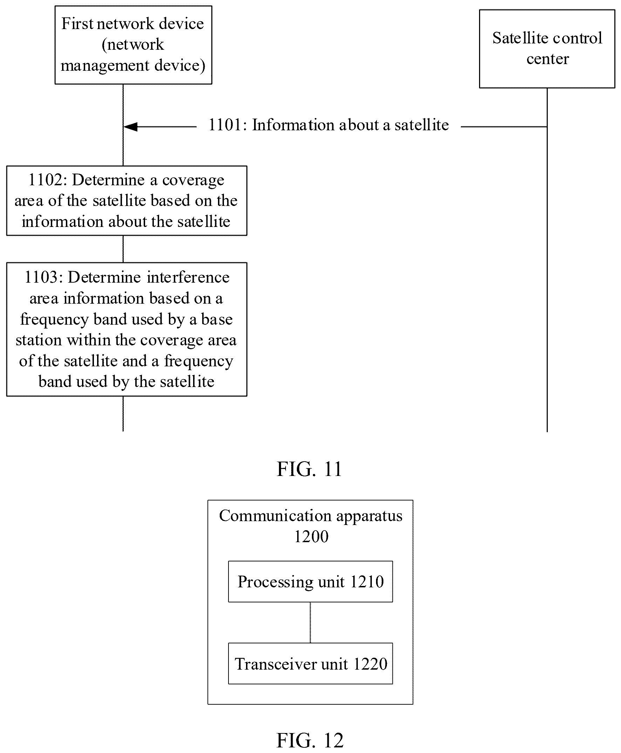

FIG. 11 is a schematic flowchart of a method for determining interference area information according to an embodiment of this application. The embodiment of FIG. 11 is a specific implementation of the embodiment of FIG. 6. In the embodiment of FIG. 11, a first network device is a network management device. To be specific, a network element in the network management device is used as the first network device.

The method includes the following steps.

Step 1101: When a satellite has a service, a satellite control center sends information about the satellite to the network management device. Correspondingly, the network management device receives the information about the satellite.

The information about the satellite in step 1101 is the same as the information about the satellite in step 601 in the embodiment of FIG. 6. Refer to the foregoing description.

Step 1102: The network management device determines a coverage area of the satellite based on the information about the satellite.

A method for determining the coverage area of the satellite in step 1102 is the same as the method for determining the coverage area of the satellite in step 602 in the embodiment of FIG. 6. Refer to the foregoing description.

Step 1103: The network management device determines interference area information based on a frequency band used by a base station within the coverage area of the satellite and a frequency band used by the satellite.

The method for determining the interference area information in step 1103 is the same as the method for determining the interference area information in step 604 in the embodiment of FIG. 6. Refer to the foregoing description.

Information about one or more base stations is prestored in the network management device, and the information about the base station is registered by the base station with the network management device. The information about the base station includes identification information of the base station, a frequency band used by the base station, and location information of the base station, and optionally, further includes EIRP information of the base station.

For beneficial effects of the embodiment of FIG. 11, refer to the beneficial effects of the embodiment of FIG. 3. Details are not described again.

It may be understood that, to implement the functions in the foregoing embodiments, the first network device includes a corresponding hardware structure and/or software module for performing each function. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

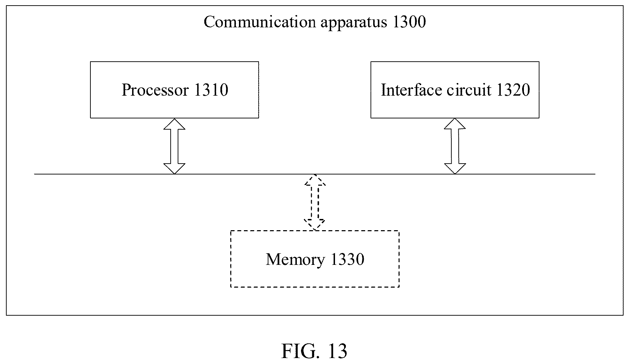

FIG. 12 and FIG. 13 each are a diagram of a structure of a possible communication apparatus according to an embodiment of this application. The communication apparatus may be configured to implement functions of the first network device in the foregoing method embodiments. Therefore, beneficial effects of the foregoing method embodiments can also be implemented. In embodiments of this application, the communication apparatus may be the first network device, or may be a module (for example, a chip) used in the first network device.

As shown in FIG. 12, a communication apparatus 1200 includes a processing unit 1210 and a transceiver unit 1220. The communication apparatus 1200 is configured to implement functions of the first network device in the method embodiments shown in FIG. 3 and FIG. 6 to FIG. 11.

When the communication apparatus 1200 is configured to implement the functions of the first network device in the method embodiments, the processing unit 1210 is configured to: determine a coverage area of a satellite; and determine interference area information based on a frequency band used by the satellite and a frequency band used by an access network device within the coverage area, where the interference area information includes identification information of at least one access network device within the coverage area, and there is an intersection between a frequency band used by the at least one access network device and the frequency band used by the satellite.

In a possible implementation method, that the processing unit 1210 is configured to determine the coverage area of the satellite specifically includes: the processing unit is configured to determine the coverage area based on ephemeris information of the satellite and valid information of a service corresponding to the frequency band used by the satellite, where the coverage area is an earth coverage visibility area of the satellite, and the valid information of the service indicates duration of the service.

In a possible implementation method, that the processing unit 1210 is configured to determine the coverage area based on the ephemeris information of the satellite and the valid information of the service corresponding to the frequency band used by the satellite specifically includes: the processing unit is configured to determine the coverage area based on the ephemeris information of the satellite, the valid information of the service corresponding to the frequency band used by the satellite, and model information, where the model information is used to indicate to determine the earth coverage visibility area of the satellite.

In a possible implementation method, that the processing unit 1210 is configured to determine the coverage area of the satellite specifically includes: the processing unit is configured to determine the coverage area based on ephemeris information of the satellite, valid information of a service corresponding to the frequency band used by the satellite, an imaging mode of the service, and an incidence angle of the satellite, where the coverage area is a coverage area of a specific beam of the satellite.

In a possible implementation method, that the processing unit 1210 is configured to determine the coverage area based on the ephemeris information of the satellite, the valid information of the service corresponding to the frequency band used by the satellite, the imaging mode of the service, and the incidence angle of the satellite specifically includes: the processing unit is configured to determine the coverage area based on the ephemeris information of the satellite, the valid information of the service corresponding to the frequency band used by the satellite, the imaging mode of the service, the incidence angle of the satellite, and model information, where the model information is used to indicate to determine the coverage area of the specific beam of the satellite.

In a possible implementation method, the transceiver unit 1220 is configured to receive, from a second network device, frequency bands used by one or more access network devices, where the one or more access network devices include an access network device within the coverage area.

In a possible implementation method, the second network device is a network management device.

In a possible implementation method, the second network device is an access network device within the coverage area. The transceiver unit 1220 is further configured to send a trigger message to a mobility management network element corresponding to the coverage area, where the trigger message includes the coverage area, and the trigger message is used to trigger the mobility management network element to indicate the access network device within the coverage area to send a used frequency band to the first network device. That the transceiver unit 1220 is configured to receives, from the second network device, the frequency bands used by the one or more access network devices specifically includes: the transceiver unit is configured to receive, from the access network device within the coverage area by using the mobility management network element, a frequency band used by the access network device.

In a possible implementation method, the transceiver unit 1220 is further configured to receive, from a satellite control center, the frequency band used by the satellite.

In a possible implementation method, that the processing unit 1210 is configured to determine the interference area information based on the frequency band used by the satellite and the frequency band used by the access network device within the coverage area specifically includes: the processing unit is configured to determine the interference area information based on the frequency band used by the satellite, the frequency band used by the access network device within the coverage area, and EIRP information of the access network device within the coverage area, where an EIRP value corresponding to EIRP information of the at least one access network device is greater than an EIRP threshold.

In a possible implementation method, that the processing unit 1210 is configured to determine the interference area information based on the frequency band used by the satellite, the frequency band used by the access network device within the coverage area, and the EIRP information of the access network device within the coverage area specifically includes: the processing unit is configured to determine the interference area information based on the frequency band used by the satellite, the frequency band used by the access network device within the coverage area, the EIRP information of the access network device within the coverage area, and model information, where the model information is used to indicate to use the EIRP information to determine the interference area information.

In a possible implementation method, the transceiver unit 1220 is further configured to receive the EIRP information from the access network device within the coverage area.

In a possible implementation method, the processing unit 1210 is further configured to store a correspondence between the identification information of the at least one access network device and identification information of the satellite.

For more detailed descriptions of the processing unit 1210 and the transceiver unit 1220, directly refer to related descriptions in the method embodiments of FIG. 3 and FIG. 6 to FIG. 11. Details are not described herein again.

As shown in FIG. 13, a communication apparatus 1300 includes a processor 1310 and an interface circuit 1320. The processor 1310 and the interface circuit 1320 are coupled to each other. It may be understood that the interface circuit 1320 may be a transceiver or an input/output interface. Optionally, the communication apparatus 1300 may further include a memory 1330, configured to store instructions executed by the processor 1310, store input data required by the processor 1310 to run the instructions, or store data generated after the processor 1310 runs the instructions.

When the communication apparatus 1300 is configured to implement the methods shown in FIG. 3 and FIG. 6 to FIG. 11, the processor 1310 is configured to implement functions of the processing unit 1210, and the interface circuit 1320 is configured to implement functions of the transceiver unit 1220.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be located in an ASIC. In addition, the ASIC may be located in an access network device or a terminal device. Certainly, the processor and the storage medium may exist in the access network device or the terminal device as discrete components.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, an access network device, a terminal device, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, at least one means one or more, and a plurality of means two or more. "And/or" describes an association relationship between associated objects and represents that three relationships may exist. For example, A and/or B may represent the following cases: Only A exists, both A and B exist, and only B exists, where A and B may be singular or plural. In the text descriptions of this application, the character "/" indicates an "or" relationship between associated objects; and in a formula in this application, the character "/" indicates a "division" relationship between associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A method for determining interference area information, comprising:
determining, by a first network device, a coverage area of a satellite; and
determining, by the first network device, interference area information based on a frequency band used by the satellite and a frequency band used by an access network device within the coverage area, wherein the interference area information comprises identification information of at least one access network device within the coverage area, and there is an intersection between a frequency band used by the at least one access network device and the frequency band used by the satellite.

2. The method according to claim 1, wherein determining, by the first network device, the coverage area of the satellite comprises:
determining, by the first network device, the coverage area based on ephemeris information of the satellite and valid information of a service corresponding to the frequency band used by the satellite, wherein the coverage area is an earth coverage visibility area of the satellite, and the valid information of the service indicates duration of the service.

3. The method according to claim 2, wherein determining, by the first network device, the coverage area based on the ephemeris information of the satellite and the valid information of the service corresponding to the frequency band used by the satellite comprises:
determining, by the first network device, the coverage area based on the ephemeris information of the satellite, the valid information of the service corresponding to the frequency band used by the satellite, and model information, wherein the model information is used to indicate to determine the earth coverage visibility area of the satellite.

4. The method according to claim 1, wherein determining, by the first network device, the coverage area of the satellite comprises:
determining, by the first network device, the coverage area based on ephemeris information of the satellite, valid information of a service corresponding to the frequency band used by the satellite, an imaging mode of the service, and an incidence angle of the satellite, wherein the coverage area is a coverage area of a specific beam of the satellite.

5. The method according to claim 4, wherein determining, by the first network device, the coverage area based on the ephemeris information of the satellite, the valid information of the service corresponding to the frequency band used by the satellite, the imaging mode of the service, and the incidence angle of the satellite comprises:
determining, by the first network device, the coverage area based on the ephemeris information of the satellite, the valid information of the service corresponding to the frequency band used by the satellite, the imaging mode of the service, the incidence angle of the satellite, and model information, wherein the model information is used to indicate to determine the coverage area of the specific beam of the satellite.

6. The method according to any one of claims 1 to 5, wherein the method further comprises:
receiving, by the first network device from a second network device, frequency bands used by one or more access network devices, wherein the one or more access network devices comprise an access network device within the coverage area.

7. The method according to claim 6, wherein the second network device is a network management device.

8. The method according to claim 6, wherein the second network device is an access network device within the coverage area, and the method further comprises:
sending, by the first network device, a trigger message to a mobility management network element corresponding to the coverage area, wherein the trigger message comprises the coverage area, and the trigger message is used to trigger the mobility management network element to indicate the access network device within the coverage area to send a used frequency band to the first network device; and
receiving, by the first network device from the second network device, the frequency bands used by the one or more access network devices comprises:
receiving, by the first network device from the access network device within the coverage area by using the mobility management network element, a frequency band used by the access network device.

9. The method according to claim 8, wherein the trigger message further comprises first indication information, the first indication information is used to trigger the mobility management network element to send second indication information to the access network device within the coverage area, and the second indication information is used to indicate the access network device within the coverage area to send the used frequency band to the first network device.

10. The method according to any one of claims 1 to 9, wherein the method further comprises:
receiving, by the first network device from a satellite control center, the frequency band used by the satellite.

11. The method according to any one of claims 1 to 10, wherein determining, by the first network device, the interference area information based on the frequency band used by the satellite and the frequency band used by the access network device within the coverage area comprises:
determining, by the first network device, the interference area information based on the frequency band used by the satellite, the frequency band used by the access network device within the coverage area, and equivalent isotropically radiated power EIRP information of the access network device within the coverage area, wherein
an EIRP value corresponding to EIRP information of the at least one access network device is greater than an EIRP threshold.

12. The method according to claim 11, wherein determining, by the first network device, the interference area information based on the frequency band used by the satellite, the frequency band used by the access network device within the coverage area, and the EIRP information of the access network device within the coverage area comprises:
determining, by the first network device, the interference area information based on the frequency band used by the satellite, the frequency band used by the access network device within the coverage area, the EIRP information of the access network device within the coverage area, and model information, wherein the model information is used to indicate to use the EIRP information to determine the interference area information.

13. The method according to claim 11 or 12, wherein
the EIRP information is the EIRP value; or
the EIRP information comprises information for determining the EIRP value.

14. The method according to any one of claims 11 to 13, wherein the method further comprises:
receiving, by the first network device, the EIRP information from the access network device within the coverage area.

15. The method according to any one of claims 1 to 14, wherein the method further comprises:
storing, by the first network device, a correspondence between the identification information of the at least one access network device and identification information of the satellite.

16. A communication apparatus, comprising a module configured to perform the method according to any one of claims 1 to 15.

17. A computer-readable storage medium, wherein the storage medium stores a computer program or instructions, and when the computer program or the instructions are executed by a communication apparatus, the method according to any one of claims 1 to 15 is implemented.

18. A communication system, comprising a first network device and a second network device, wherein
the second network device is configured to send, to the first network device, frequency bands used by one or more access network devices, wherein the one or more access network devices comprise an access network device within a coverage area of a satellite; and
the first network device is configured to: determine the coverage area of the satellite; and determine interference area information based on a frequency band used by the satellite and a frequency band used by the access network device within the coverage area, wherein the interference area information comprises identification information of at least one access network device within the coverage area, and there is an intersection between a frequency band used by the at least one access network device and the frequency band used by the satellite.
